# EUROPÄISCHE PATENTSCHRIFT

(11) **EP 3 409 459 B1**
(45) Veröffentlichungstag und Bekanntmachung des Hinweises auf die Patenterteilung: **21.08.2019**
(21) Anmeldenummer: 17173743.0
(22) Anmeldetag: 31.05.2017
(51) Int. Cl.: B32B 3/12, B32B 5/02, B32B 5/26, B32B 7/00, B32B 29/02, B32B 5/12

(54) **LEICHTBAUTEIL**
LIGHTWEIGHT COMPONENT
ÉLÉMENT STRUCTUREL LÉGER

(43) Veröffentlichungstag der Anmeldung: 05.12.2018
(73) Patentinhaber: Bucher Leichtbau AG, 8117 Fällanden (CH)
(72) Erfinder: SCHERTLER, Michael, 35684 Dillenburg (DE); MÜLLER, Ruxandra, 8152 Glattpark (Opfikon) (CH)
(74) Vertreter: Liebetanz, Michael

(56) Entgegenhaltungen:
- US-A1- 2010 055 384
- US-A1- 2015 151 524
- US-A1- 2016 114 556

## Beschreibung

### TECHNISCHES GEBIET

Die vorliegende Erfindung betrifft ein Leichtbauteil, das Deckschichten und einen Wabenkern enthält, wobei die dem Wabenkern beidseitig benachbarten Deckschichten ein Gewebe als Verstärkungsfasern aufweisen.

### STAND DER TECHNIK

Die EP 0 927 737 B1 beschreibt eine Kombination von Prepreg-Gewebe und einer wabenförmigen Sandwich-Platte, wobei die Deckschichten umfassen: ein Gewebe als Verstärkungsfasern, ein gehärtetes duroplastisches Harz und Feinteilchen aus einem thermoplastischen Harz, mit den Merkmalen des Oberbegriffs des Anspruchs 1.

Die WO 2016/182693 beschreibt eine akustische Struktur mit einem zentralen Wabenkern, der auf der einen Seite von einem porösen Schicht und von der anderen Seite von einer akustischen Barriereschicht begrenzt ist.

WO 2015/074090 beschreibt Innenverkleidungsteile und Baugruppen für eine Luftfahrzeugzelle zum Einbau von Zwischenwänden, wobei diese Innenverkleidungen eine Gitterstruktur zur Befestigung dieser Zwischenwände aufweisen und selber eine Wabenstruktur aufweisen.

Innenwände selber sind in DE 10 2011 082 087 offenbart und haben einen CFK-Verbund, einen Prepreg und einen Wabenverbund, um formtreue, masshaltige und biegesteife Sandwich-Faserkunststoffverbund-Bauteile zu ermöglichen. Der Kernwerkstoff ist als planes starres Halbzeug und für gewölbte Formgebungen als dreidimensional biegsames Halbzeug ausgefuehrt. Dieser Kernwerkstoff ermöglicht im Vergleich zum herkömmlichen Kernwerkstoff - wesentlich erhöhte mechanische Eigenschaften.

Nach US 2015/151524 kann eine Wabenstruktur mit Prepreg umgeben sein, die unter entsprechenden Bedingungen behandelt werden. Eine Stabilisierschicht kann dann aus einem unidirektionellen Kohlefaser-Band bestehen, wobei nach der parallelen EP 2 746 042 B1 zuerst eine Wabenstruktur als Vorform bereitzustellen ist, bevor durch die Laminierung von weiteren Elementen ein Endprodukt als Vorform erhalten wird.

WO 2010/033266 beschreibt eine mehrlagige Schutzwand, insbesondere für Luftfahrzeuge, gegen Explosionsereignisse mit einer UHMWPE-Schicht, also einer Schicht aus ultra-hochmolekularem Polyethylen, einer Wabenschicht und flammenresistenten Klebeschichten, umfassend insgesamt neun Schichten.

EP 1 815 969 beschreibt ein Flugzeugbauteil mit einer Laminatschicht, auf die ein Kupplungharz aufgetragen wird, auf die dann ein Wabenkern aufgesetzt wird, wobei das Kupplungharz an den Wabenwänden aufsteigt und einen Befestigungsmeniskus bildet. Weitere Fasermattenlager mit Glasfasern oder Kohlefasern sind zur Verbindung mit einem Epoxyharz getränkt. Ferner kann der Wabenkern aus Polyamid oder Aramidfasern bestehen und mit Phenylhaz getränkt sein. Diese Bauteile sind insbesondere für Druckkabinenelemente vorgesehen.

EP 0 289 860 beschreibt bereits ein Schichtbauteil aus faserverstärkten Kunststoffmaterialien mit einer Harz-getränkten Textiloberfläche.

CN 10 58 82 016 A beschreibt einen Mehrschichtleichtbau mit einem Wabenkern aus Aramidfasern.

Ein Leichtbauteil mit den Merkmalen des Oberbegriffs des Anspruchs 1 ist aus der US 2010/055384 A1 bekannt.

### DARSTELLUNG DER ERFINDUNG

Ausgehend von diesem Stand der Technik liegt der Erfindung die Aufgabe zugrunde, ein Leichtbauteil, insbesondere für den Flugzeugbau anzugeben, das geeignet ist, um an diesem leichter Ausstattungsgegenstände eines Flugzeugs zu befestigen, ohne die Eigenstabilität des Leichtbauteils zu beeinflussen.

Diese Aufgabe wird erfindungsgemäss dadurch gelöst, dass, die Reihenfolge der drei Gelege in steigender Entfernung vom Wabenkern dergestalt ist, dass das Gelege mit den Fasern, die im Mittel mit 0 Grad zur L-Richtung ausgerichtet sind, am weitesten vom Wabenkern entfernt ausgerichtet ist. Damit wird die höchste Leistungsfähigkeit auf Zug- und Druckbelastung auf Grund der Tatsache erreicht, dass diese im Mittel mit 0 Grad zur L-Richtung ausgerichteten Gelege beidseitig so weit wie möglich entfernt vom Wabenkern einander gegenüberliegend angeordnet sind.

Als innerstes, dem Wabenkern am nächsten kommende Gelege kann das +45 Grad zur L-Richtung ausgerichtete Gelege oder alternativ das -45 Grad zur L-Richtung ausgerichtete Gelege vorgesehen sein.

Zu den drei beidseitig zum Wabenkern angeordneten und oben genannten Gelegen können zwei weitere Gelege parallel zu 0 Grad zur besagten L-Richtung vorgesehen sein, die weiter vom Wabenkern entfernt als das zweite Gelege angeordnet sind. Der Vorteil von mehreren dünnen Lagen in der besagten L-Richtung liegt darin, dass diese Leichtbauteil eine bessere Krafteinleitung in das Panel durch eine bessere interlaminare Spannungsverteilung gegenüber einer einzigen dickeren Lage ermöglicht. Diese dünnen Lagen haben vorteilhafterweise eine Dicke von 0,12 bis 0,15 Millimeter und durch den seitlichen Versatz der Faserlagen zueinander werden die Hohlräume zwischen diesen Lagen bei den eins bis drei Gelegen parallel zu 0 Grad zur besagten L-Richtung teilweise ausgefüllt. Mit anderen Worten: sind mindestens zwei Gelege parallel zu 0 Grad zur besagten L-Richtung vorhanden, so sind diese in Bezug auf ihre Fasern seitlich versetzt zueinander positioniert und es wird eine im Verbund dieser Gelege geringere Bauhöhe als die Summe der Bauhöhen der einzelnen Gelege parallel zu 0 Grad zur besagten L-Richtung erreicht. Neben der geringeren Bauhöhe des entsprechenden Bauteils kann für dieses auch noch in dieser L-Richtung überraschender Weise eine bessere Spannungsverteilung nachweisen.

Das Leichtbauteil weist zusätzlich vorteilhafterweise auf beiden Seiten des Wabenkerns eine äusserste Abschlusslage aus kunstharzfreiem E-Glas auf.

Das Leichtbauteil kann zusätzlich als Kontaktlage zwischen dem Wabenkern und den Prepregs ein Polyestervlies auf Phenolharzbasis aufweisen.

Der Wabenkern kann aus einem Aramidfaserpapier hergestellt sein, insbesondere aus einem para-Aramidfaserpapier. Das Papier kann mit einem Kunstharz, insbesondere Phenolharz, überzogen sein.

Das Leichtbauteil ist für den Einbau und die Anbindung an eine Flugzeugstruktur mit mindestens einem Upper- oder Lower-Attachment versehen, wobei die L-Richtung der durchgehenden Papierbahn des Wabenkernmaterials im wesentlichen der Richtung einer Verbindung zwischen einem Upper-Attachment und einem zugeordneten Lower-Attachment entspricht. Mit anderen Worten, die L-Richtung entspricht der Verbindung zwischen oben und unten im Flugzeug.

Weitere Ausführungsformen sind in den abhängigen Ansprüchen angegeben.

### KURZE BESCHREIBUNG DER ZEICHNUNG

Bevorzugte Ausführungsformen der Erfindung werden im Folgenden anhand der einzigen Zeichnung beschrieben, die lediglich zur Erläuterung dient und nicht einschränkend auszulegen ist. Diese zeigt eine schematische perspektivische Ansicht eines Leichtbauteils gemäss einem Ausführungsbeispiel nach der Erfindung.

### BESCHREIBUNG BEVORZUGTER AUSFÜHRUNGSFORMEN

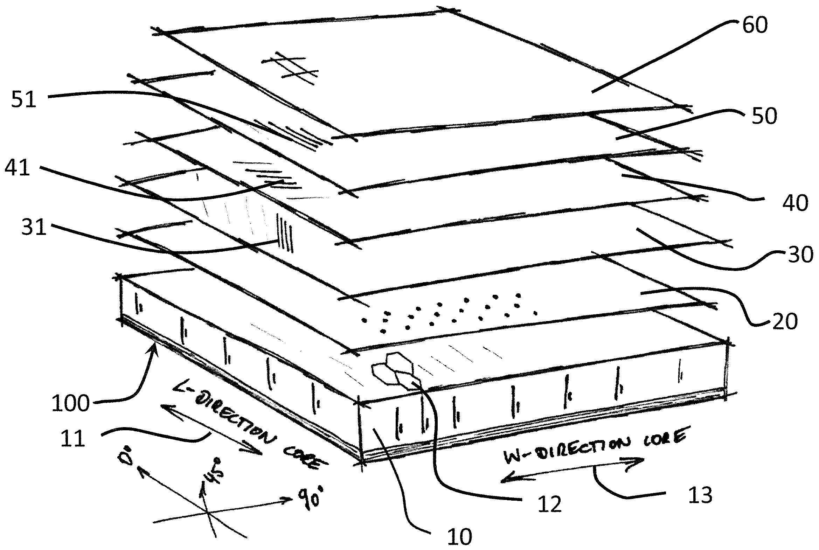

Die Fig. 1 zeigt eine schematische perspektivische Ansicht eines Leichtbauteils gemäss einem Ausführungsbeispiel nach der Erfindung. Solche Leichtbauteile kommen als multifunktionale Trennwände in den Türbereichen, aber auch im zylindrischen Teil von Kabinen von Flugzeugen zum Einsatz. Sie sind entweder als sogenannte "under bin", oder als "full height"-Version ausgelegt. Sie können auch als Single Aisle und Twin Aisle, somit auch als sogenannte Center Partitions in "under bin" oder als "full height"-Version ausgelegt sein.

Diese Leichtbauteile sind in der Lage, eine Vielfalt von Anbauteilen, wie z.B. Klapptische oder Magazinhalter aufzunehmen, und können mit elektrischen Komponenten wie Monitoren, Kommunikations- und Steuerungsanlagen ausgerüstet werden.

Die Leichtbauteile werden mit einem oder mehreren sogenannten Upper- und Lower-Attachments an die Flugzeugstruktur angebunden. Dabei entspricht die im wesentliche vertikale Ausrichtung der Leichtbauteile der L-Richtung der später im Rahmen dieser Beschreibung erläuternden Wabenkernstruktur und ist damit gleichbedeutend zu der entsprechenden Ausrichtung der Hauptbelastungsrichtung.

Bevorzugte Ausführungsbeispiele setzen 3-lagige und 5-lagige Gelege ein. Beide Typen sind als Panel mit 28,0 mm Materialstärke und mit 26,4 mm Materialstärke hergestellt worden. Beide Typen haben eine Fertigungstoleranz von +0/-0,4 mm. Die Panels sind ausgelegt, um im Belastungsfall vorrangig der Durchbiegung zu widerstehen.

Ein Wabenkern 10 wird mit den drei Prepregs 30, 40, 50 verbacken. In nicht in der Zeichnung dargestellten Ausführungsbeispielen können es auch vier oder fünf Prepregs sein, prinzipiell auch eine unterschiedliche Anzahl auf den beiden Seiten des Wabenkrens 10. Der Verbindungsprozess kann zum einen in einem Pressverfahren geschehen, insbesondere für gerade Panels, zum anderen kann ein Autoklavverfahren eingesetzt werden, beispielsweise bei Panels mit einer 4" oder 6" Schränkung oder insbesondere bei Sondergrössen.

Der Wabenkern 10 besteht aus Aramidfaserpapier auf Phenolharzbasis, beispielsweise hergestellt von der Fa. Schütz unter der Bezeichnung Cormaster N636-4.8-32.

Als Grundlage dient ein Aramidfaserpapier (Para-Aramid), das zum Wabenkern 10 verarbeitet wird. Der einsatzfähige Kern hat Waben 12 mit einer Schlüsselweite von ca. 4,8 mm und ein Raumgewicht von ca. 32,0 kg/m³ und wird mittels Säge auf die richtige Höhe geschnitten. Die Toleranzen für die Schlüsselweiten und Raumgewichte sind mit ca. +/-10% anzunehmen. Produktionsbedingt gibt es eine L- und W-Richtung des Wabenkerns 10. Die L-Richtung 11 ist die Richtung der aufeinander angeordneten Papierlagen, während die W-Richtung 13 die Richtung der Klebeverbindung der Papiere ist, also den Bezug zur Lagendicke hat. Beide sind um 90° versetzt zueinander. Die L-Richtung 11 des Kerns hat eine höhere mechanische Leistungsfähigkeit und wird somit in der Hauptbelastungsrichtung (Biegung) auf die Höhe der Partition in der vertikalen ausgerichtet.

Das Panel verwendet eine Kontaktlage zwischen Wabenkern und der ersten Lage Prepreg 30. Die Kontaktlage 20 ist ein Polyestervlies auf Phenolharzbasis des Herstellers SGL mit der Bezeichnung Sigapreg H N30-P320 und einem Flächengewicht von ca. 35,0 gr./m².

Als Prepregs 30, 40 und 50 kommen unidirektionale Kohlenstofffaser-Gelege (CFK-Tapes) der Fa. SGL zum Einsatz mit der Bezeichnung Sigapreg C U150-0/ NF-P310 und einer Kohlenstofffaser SIGRAFIL C T50-4.4/255-E100 mit ca. 38,0 - 42,0% Phenolharzanteil. Das Trockengewicht liegt bei ca. 150,0 gr./m². Eingebettet in die Phenolharzmatrix liegt das Flächengewicht des als Klebeprepreg ausgeführten Geleges ca. zwischen 242,0 - 248,0 gr./m².

Die Fasern in dem Gelege sind sogenannte High tensile Fasern mit hoher Zugfestigkeit. Mit 50k hat die einzelne Faser ca. 50.000 Filamente und eine Garnfeinheit von ca. 3.450 tex, was einem Gewicht von ca. 3.450 gr./km für ein Garn entspricht.

Die Materialstärke jedes einzelnen Prepregs 30, 40, 50 liegt ca. zwischen 0,12 - 0,17 mm. Kreuzen sich die Fasern unter +/-45° bis +/- 90°, so ist im Faserverbund eine Dicke von ca. 0,15 - 0,17 mm pro Lage Prepreg anzunehmen. Liegen mehrere Lagen Prepreg parallel in einer Richtung, so kann mit einer Lagendicke von ca. 0,12 - 0,15 mm gerechnet werden. Letzteres ist als der "Nesting effect" zu bezeichnen, da dann die übereinander liegenden gleichausgerichteten Lagen jeweils in einer weiteren Schicht zwischen zwei nebeneinander liegende Faseranordnungen zu liegen kommen.

Bei dem in der Figur dargestellten 3-lagigen Typ bestehen zuerst zwei innere Lagen 30 und 40 unter + 45° beziehungsweise - 45°, mit einer Überlagerung von 90°, und eine gegenüber dem Wabenkern 10 äussere Lage in 0° Ausrichtung parallel zur L-Richtung des Wabenkerns, die entfernt gegenüber dem Wabenkern 10 angeordnet ist. Bei vier oder fünf Lagen folgen den beiden +/- 45 Grad Lagen (oder anderherum -/+45 Grad Lagen) jeweils zwei oder drei Lagen in 0° Ausrichtung parallel zur L-Richtung des Wabenkerns.

Das Leichtbauteil weist vorteilhafterweise als äusserste Abschlusslage ein E-Glas Gewebe 60 der Fa. SGL mit der Bezeichnung Sigapreg G W25-PL1/1-P320 und einem Flächengewicht von ca. 25,0 gr./m² ohne eigenen Phenolharzanteil auf.

Die Figur zeigt die oberen Schichten 20, 30, 40, 50 und 60 in einer Explosionsansicht in einem Abstand zum Wabenkern 10. Auf der Rückseite des Wabenkerns 10 sind vorteilhafterweise dieselben Schichten vorgesehen. In der Figur sind sie dabei schon in der Weise dargestellt, wie sie beim fertigen Leichtbauteil vorliegen, nämlich als miteinander untrennbar verbundene Schichten an der Unterseite des Wabenkerns.

Durch die Kombination aus einer Schlüsselweite von ca. 4,8 mm des Wabenkerns 10 und der beiden Torsionslagen 30 und 40 unter +/- 45°, sowie der einen oder drei Lage(n) 50 in 0° Richtung zur L-Richtung des Wabenkerns 10 ist kein ausgeprägter "Telegraphing effect" wahrzunehmen. Die Ebenheit des Panels ist hervorragend. Visuell ist die Oberfläche des Wabenkerns 10 deutlich zu erkennen.

**BEZUGSZEICHENLISTE**

| | | | |
|---|---|---|---|
| 10 | Wabenkern | 41 | Ausrichtung unidirektionales |
| 11 | Wabenkern L-Richtung | | Gelege -45 Grad |
| 12 | Wabenkern | 50 | Verstärkungslage 0 Grad |
| 13 | Wabenkern W-Richtung | 51 | Ausrichtung unidirektionales |
| 20 | Klebefilm | | Gelege 0 Grad |
| 30 | Verstärkungslage +45 Grad | 60 | Abschlusslage |
| 31 | Ausrichtung unidirektionales Gelege +45 Grad | 100 | zusammengesetzte Deckschichten |
| 40 | Verstärkungslage -45 Grad | | |

## Patentansprüche

1. Leichtbauteil, das Deckschichten (100; 30, 40, 50, 60) und einen Wabenkern (10) enthält, wobei die dem Wabenkern (10) beidseitig benachbarten Deckschichten ein Gewebe (30, 40, 50) als Verstärkungsfasern aufweisen, wobei dem Leichtbauteil eine Hauptbelastungsrichtung zugeordnet ist, die der L-Richtung (11) der durchgehenden Papierbahn des Wabenkernmaterials entspricht, wobei das Gewebe beidseitig mindestens drei übereinander liegende Prepregs (30, 40, 50) umfasst, die jeweils als ein unidirektionales Gelege (31, 41, 51) ausgestaltet sind, wobei ein erstes der unidirektionalen Gelege (41) zu +45 Grad zur besagten L-Richtung ausgerichtet ist, wobei ein zweites der unidirektionalen Gelege (51) parallel zu 0 Grad zur besagten L-Richtung ausgerichtet ist, und wobei ein drittes der unidirektionalen Gelege (31) zu -45 Grad zur besagten L-Richtung ausgerichtet ist, **dadurch gekennzeichnet, dass** die Reihenfolge der drei Gelege in steigender Entfernung vom Wabenkern (10) dergestalt ist, dass das Gelege (51) mit den Fasern, die im Mittel mit 0 Grad zur L-Richtung ausgerichtet sind, am weitesten vom Wabenkern (10) entfernt angeordnet ist.

2. Leichtbauteil nach Anspruch 1, **dadurch gekennzeichnet, dass** auf einer oder beiden Seiten ein bis zwei weitere Gelege parallel zu 0 Grad zur besagten L-Richtung (11) vorgesehen sind, die als äusserste Gelege um die besagten drei Gelege (30, 40, 50) angeordnet sind.

3. Leichtbauteil nach Anspruch 2, **dadurch gekennzeichnet, dass** die mindestens zwei Gelege parallel zu 0 Grad zur besagten L-Richtung (11) in Bezug auf ihre Fasern seitlich versetzt sind und eine im Verbund geringere Bauhöhe als die Summe der Bauhöhen der einzelnen Gelege parallel zu 0 Grad zur besagten L-Richtung (11) aufweisen.

4. Leichtbauteil nach einem der vorstehenden Ansprüche, **dadurch gekennzeichnet, dass** das Leichtbauteil auf beiden Seiten des Wabenkerns (10) eine äusserste Abschlusslage (60) aus kunstharzfreiem E-Glas aufweist.

5. Leichtbauteil nach einem der vorstehenden Ansprüche, **dadurch gekennzeichnet, dass** auf beiden Seiten des Wabenkerns zwischen dem Wabenkern und den Prepreg-Lagen (30, 40, 50) eine Kontaktlage aus einem Polyestervlies auf Phenolharzbasis angeordnet ist.

6. Leichtbauteil nach einem der vorstehenden Ansprüche, **dadurch gekennzeichnet, dass** der Wabenkern (10) aus einem Aramidfaserpapier hergestellt ist.

7. Leichtbauteil nach Anspruch 6, **dadurch gekennzeichnet, dass** das Aramidfaserpapier ein para-Aramidfaserpapier ist.

8. Leichtbauteil nach Anspruch 6 oder Anspruch 7, **dadurch gekennzeichnet, dass** das Aramidfaserpapier mit einem Kunstharz, insbesondere einem Phenolharz, überzogen ist.

9. Leichtbauteil nach einem der vorstehenden Ansprüche, **dadurch gekennzeichnet, dass** es mit mindestens einem Upper- oder Lower-Attachment für eine Anbindung an eine Flugzeugstruktur versehen ist, wobei die L-Richtung (11) der durchgehenden Papierbahn des Wabenkemmaterials im wesentlichen der Richtung einer Verbindung zwischen einem Upper-Attachment und einem zugeordneten Lower-Attachment entspricht.

## Claims

1. Lightweight component, comprising cover layers (100; 30, 40, 50, 60) and a honeycomb core (10), wherein the cover layers adjacent on both sides to the honeycomb core (10) have a fabric (30, 40, 50) as reinforcing fibers, the lightweight component being assigned a main loading direction which corresponds to the L direction (11) of the continuous paper web of the honeycomb core material, the fabric comprising on both sides at least three prepregs (30, 40, 50) which lie one above the other and are each in the form of a unidirectional fabric (31, 41, 51), a first of said unidirectional fabrics (41) being oriented at +45 degrees to said L direction, a second of said unidirectional fabrics (51) being oriented at 0 degrees parallel to said L direction, and a third of said unidirectional fabrics (31) being oriented at -45 degrees to said L direction, **characterized in that** the order of the three fabrics at increasing distance from the honeycomb core (10) is such that the fabrics (51) with the fibers oriented on average 0 degrees to the L-direction are located furthest from the honeycomb core (10).

2. Lightweight component according to claim 1, **characterized in that** on one or both sides there are provided one to two further fabrics parallel to 0 degrees to said L-direction (11), which are arranged as outermost fabrics around said three fabrics (30, 40, 50).

3. Lightweight component according to claim 2, **characterized in that** the at least two fabrics parallel to 0 degrees to said L-direction (11) are laterally offset with respect to their fibers and have an overall height lower than the sum of the overall heights of the individual fabrics parallel to 0 degrees to said L-direction (11).

4. Lightweight component according to one of the above claims, **characterized in that** the lightweight component has, on both sides of the honeycomb core (10), an outermost end layer (60) made of synthetic resin-free E-glass.

5. Lightweight component according to one of the above claims, **characterized in that** on both sides of the honeycomb core between the honeycomb core and the prepreg layers (30, 40, 50) is arranged a contact layer of a polyester fleece based on phenolic resin.

6. Lightweight component according to one of the above claims, **characterized in that** the honeycomb core (10) is made of an aramid fiber paper.

7. Lightweight component according to claim 6, **characterized in that** the aramid fiber paper is a para-aramid fiber paper.

8. Lightweight component according to claim 6 or claim 7, **characterized in that** the aramid fiber paper is coated with a synthetic resin, in particular a phenolic resin.

9. Lightweight component according to one of the above claims, **characterized in that** it is provided with at least one upper or lower attachment for attachment to an aircraft structure, the L direction (11) of the continuous paper web of honeycomb core material substantially corresponding to the direction of a bond between an upper attachment and an associated lower attachment.

## Revendications

1. Elément structurel léger, lequel comprend des couches extérieures (100 ; 30, 40, 50, 60) et une âme en nid d'abeilles (10), où les couches extérieures adjacentes des deux côtés à l'âme en nid d'abeilles (10) présentant un tissu (30, 40, 50) comme fibres de renforcement, où une direction de charge principale est attribuée à l'élément structurel léger, laquelle direction de charge principale correspond à la direction L (11) de la bande continue en papier du matériel de l'âme en nid d'abeilles, où le tissu comprend sur chaque côté au moins trois préimprégnés (30, 40, 50) qui se superposent et sont chacun sous la forme d'un tissus unidirectionnel (31, 41, 51), un premier desdits tissus unidirectionnels (41) étant orienté à +45 degrés par rapport à ladite direction L, un second desdits tissus unidirectionnels (51) étant orienté à 0 degré parallèlement à ladite direction L, et un troisième desdits tissus unidirectionnels (31) étant orienté à -45 degrés par rapport à ladite direction L, **caractérisé en ce que** l'ordre des trois tissus à une distance croissante de l'âme en nid d'abeilles (10) est tel que le tissus (51) avec les fibres orientées en moyenne à 0 degré dans la direction L sont situées le plus loin de l'âme en nid d'abeilles (10).

2. Elément structurel léger selon la revendication 1, **caractérisé en ce qu'**il est prévu, sur un ou deux côtés, une à deux couches supplémentaires parallèles à 0 degré dans la direction L (11), qui sont disposées en couches extérieures autour desdits trois tissus (30, 40, 50).

3. Elément structurel léger selon la revendication 2, **caractérisé en ce que** les au moins deux tissus parallèles à 0 degré dans ladite direction L (11) sont décalés latéralement par rapport à leurs fibres et ont une épaisseur totale inférieure à la somme des épaisseur totales des tissus individuels parallèles à 0 degré dans ladite direction L (11).

4. Elément structurel léger selon l'une des revendications ci-dessus, **caractérisé en ce que** l'élément structurel léger présente, des deux côtés de l'âme en nid d'abeilles (10), une couche d'extrémité extérieure (60) en verre de type E sans résine synthétique.

5. Elément structurel léger selon l'une des revendications ci-dessus, **caractérisé en ce que** des deux côtés de l'âme en nid d'abeilles est disposé entre l'âme en nid d'abeilles et les couches préimprégnées (30, 40, 50) une couche de contact en un non-tissé polyester à base de résine phénolique.

6. Elément structurel léger selon l'une des revendications ci-dessus, **caractérisé en ce que** l'âme nid d'abeilles (10) est réalisé en papier fibre aramide.

7. Elément structurel léger selon la revendication 6, **caractérisé en ce que** le papier fibre aramide est un papier fibre para-aramide.

8. Elément structurel léger selon la revendication 6 ou 7, **caractérisé en ce que** le papier fibre aramide est revêtu d'une résine synthétique, en particulier d'une résine phénolique.

9. Elément structurel léger selon l'une des revendications ci-dessus, **caractérisé en ce qu'**il est pourvu d'au moins une fixation supérieure ou inférieure destinée à être fixée à une structure d'aéronef, la direction L (11) de la bande continue de papier avec âme en nid d'abeilles correspondant sensiblement à la direction d'une liaison entre une fixation supérieure et une fixation inférieure associée.
